# EUROPEAN PATENT APPLICATION

(11) **EP 4 685 729 A1**
(43) Date of publication of application: **28.01.2026**
(21) Application number: 24775148.0
(22) Date of filing: 18.03.2024
(51) Int. Cl.: G06Q 50/10, G06F 16/9035, G06Q 30/06, G06Q 50/50

(54) **DEVICE FOR PROVIDING MATCHING SERVICE AND METHOD THEREFOR**

(30) Priority: 21.03.2023 KR 20230036735; 14.03.2024 KR 20240035743
(71) Applicant: Hyperconnect LLC, Seoul 06164 (KR)
(72) Inventor: SEO, Tae Young, Seoul 06164 (KR); RYOU, Byoung Ho, Seoul 06164 (KR)
(74) Representative: Haseltine Lake Kempner LLP
(86) International application number: PCT/KR2024/003328
(87) International publication number: WO 2024/196100

(57) **Abstract**

The present invention discloses a method of providing a matching service in an electronic device, comprising: a step wherein a first user entering a match-pending group is identified; a step wherein match suitability information is obtained related to the progress of matching among a plurality of users in the match-pending group; and a step wherein match information corresponding to the first user is obtained based on the match suitability information.

## Description

### [Technical Field]

The present invention relates to a device that provides a matching service and to a method of the same. More specifically, the present invention relates to an electronic device and method of obtaining information about match suitability related to the progress of matching among a plurality of users belonging to a match-pending group, and obtaining match information corresponding to a user based on the match suitability information.

### [Background Art]

As electronic technology advances, terminals such as smartphones and tablet PCs are becoming more widespread. Such high-performance terminals can support functionality such as photography, playback, and communication with other terminals; based on such functionality, users can chat and make video calls using their own terminals.

There may be various types of such services related to chatting or video calls or the like between users. For example, it can be made possible to meet and converse with others by providing a service that provides opportunity for matching among users of the service.

But because each person differs in whom they prefer to converse with, difficulties arise in that if the counterpart is matched completely randomly, then either the conversation may not last long, or the experience of using the service may be unsatisfactory.

Reference can be made in this regard to prior references such as KR102044241B1 and KR102330643B1.

### [Detailed Description of Invention]

### [Technical problem]

The technical problem to be solved by the embodiments of the present invention, in order to address the above-described problems, is to provide an electronic device and a method for the same, whereby: a first user entering a match-pending group is identified; match suitability information is obtained related to the progress of matching among a plurality of users in the match-pending group; and a match information corresponding to the first user is obtained based on the match suitability information.

The technical problems to be solved by the present embodiments are not limited to the technical problem set forth above; further technical problems can be inferred from the embodiments below.

### [Technical means of solving the problem]

The method of providing a matching service in an electronic device according to one embodiment comprises: a step wherein a first user entering a match-pending group is identified; a step wherein match suitability information is obtained related to the progress of matching among a plurality of users in the match-pending group; and a step wherein match information corresponding to the first user is obtained based on the match suitability information.

According to one embodiment, the step wherein the match suitability information is obtained may comprise: a step wherein pairs are confirmed that can be formed among the plurality of users and have a likelihood of matching; and a step wherein, for each respective pair with a likelihood of matching, the match suitability for that pair is confirmed in relation to the progress of matching.

According to one embodiment, the step wherein the potentially matching pairs are identified may comprise: a step wherein it is determined whether the first user is using a filtering service; and a step wherein if the first user is using a filtering service, then the pairs with counterparts satisfying a filter condition set by the first user are included among the pairs with a likelihood of matching; in addition, it is possible that the electronic device does not include, in the pairs with a likelihood of matching, those pairs with counterparts that do not satisfy the filter condition.

According to one embodiment, the filter condition may comprise one or more of: a condition for matching with a counterpart of a specific gender, and a condition for matching with a counterpart in a particular region.

According to one embodiment, the step wherein the match information is obtained may comprise: a step wherein, among the pairs with a likelihood of matching, pairs are identified the match suitability of which is not eliminated by a threshold condition in relation to the matching progress.

According to one embodiment, the step wherein the match information is obtained may further comprise: a second step wherein a pair is identified that has the highest match suitability among those pairs that are not eliminated by the threshold condition; a third step wherein the users belonging to the pair having the highest match suitability are matched and are excluded them from the match-pending group; a fourth step wherein those pairs not eliminated by the threshold condition are updated so that pairs that contained one or more of the users excluded from the match-pending group are excluded; and a fifth step wherein the second step, the third step, and the fourth step are repeatedly carried out on the updated pairs.

According to one embodiment, the step wherein the pairs not eliminated by the threshold condition for match suitability are identified may comprise: a step wherein it is determined whether the first user has requested that a threshold condition be set; and a step wherein if the first user has requested that a threshold condition be set, then it is determined whether the match suitability in relation to the progress of matching for the pairs with a likelihood of matching to which the first user belongs, satisfies the threshold condition for the first user.

According to one embodiment, the step wherein it is determined whether the first user has requested that a threshold condition be set may comprise a step wherein it is determined whether the first user is using a premium service.

According to one embodiment, if the first user is using a premium service, and the second user who requested that a threshold condition be set is not using the premium service, then the minimum match suitability required to satisfy the threshold condition of the first user may be higher than the minimum match suitability required to satisfy the threshold condition of the second user.

According to one embodiment, if the first user requests that a threshold condition be set, then the step wherein pairs are identified the match suitability of which is not eliminated by the threshold condition may further comprise: a step wherein it is determined whether the elapsed time since the first user entered the match-pending group satisfies a condition that has been set; and a step wherein if the elapsed time satisfies the condition that has been set, then the threshold condition of the first user is adjusted.

According to one embodiment, the minimum elapsed time required to satisfy the condition that has been set may be longer than the update cycle of the match-pending group.

According to one embodiment, the electronic device may obtain match suitability information based on the condition information that has been set.

According to one embodiment, the step wherein a first user entering the match-pending group is identified may comprise: one or more of: a step wherein a matching request is obtained from the first user; and a step wherein the termination of the first user's previous match is confirmed.

According to one embodiment, the electronic device may obtain information about match suitability based on user information, comprising one or more of: the user's interests, the user's age, the user's region, the user's gender, the user's matching history, the user's service usage time, the user's service subscription period, and whether the user is using a premium service.

According to one embodiment, the step wherein match suitability information is obtained may comprise: a step wherein the user information is entered into a pre-trained matching model; and a step wherein an output of the matching model is obtained.

According to one embodiment, the method of providing a matching service may further comprise: a step wherein the first user is matched with another user based on the match information; and a step wherein the matching model is further trained based on the result of matching the first user with the other user.

According to one embodiment, if the first user is not matched with another user, then the method of providing a matching service may further comprise: a step wherein, after the match-pending group is updated, information is obtained on match suitability related to the progress of matching among a plurality of users belonging to the updated match-pending group; and a step wherein match information that corresponds to the first user is reobtained, based on match suitability information related to the progress of matching among a plurality of users belonging to the updated match-pending group.

According to one embodiment, the step wherein the match suitability information is obtained may comprise a step wherein a point bonus is awarded to a user who is using a premium service.

According to one embodiment, the match suitability may comprise information reflecting an expected value of conversation duration during the matching process.

According to one embodiment, the method of providing a matching service may further comprise: a step wherein history information is obtained that is related to the provision of the matching service; a step wherein, based on the history information, information is generated that recommends the use of a premium service; and a step wherein the information that recommends using the premium service is provided to the first user.

According to one embodiment, the information recommending the use of the premium service may comprise one or more of: information comparing the expected value of conversation duration when using the premium service with the expected value of conversation duration when not using the premium service; and information comparing the likelihood of conversing for a time exceeding a specified criterion when using the premium service with the likelihood of conversing for a time exceeding the specified criterion when not using the premium service.

According to one embodiment, if the number of users of the matching service satisfies a specified condition, then the electronic device may provide information recommending the use of the premium service to the first user.

According to one embodiment, the method of providing a matching service may further comprise: a step wherein the first user's history of using the matching service is confirmed; and a step wherein, based on the first user's usage history of the matching service, it is decided whether to provide the first user with information recommending the use of the premium service.

An electronic device that provides a matching service according to one embodiment comprises: a transceiver, a memory that stores commands, and a processor, and the processor: is connected to the transceiver and the memory, identifies a first user entering a match-pending group, obtains match suitability information related to the progress of matching among a plurality of users in the match-pending group; and obtains match information corresponding to the first user based on the match suitability information.

Other specific details of embodiments are included in the detailed description and the drawings.

### [Effect of Invention]

According to the present invention, the device that provides a matching service and the method for the same can increase overall user satisfaction with use of the service by providing a matching method that can increase the likelihood of matching with a desired counterpart.

According to one embodiment of the present invention, the device for providing a matching service and the method for the same can increase the satisfaction of service users by providing a function that enables matching with a counterpart who satisfies a particular condition.

The effects of the invention are not limited to the effects mentioned above; further effects not mentioned will be plainly apparent to a person of ordinary skill in the art based on what is recited in the claims.

### [Brief Description of the Drawings]

FIG. 1 is a schematic drawing showing a system that provides a matching service according to one embodiment.
FIG. 2 is an operation flowchart illustrating the operation of each device in a system providing a matching service according to one embodiment.
FIG. 3 is a drawing illustrating, by way of example, a method of obtaining match information based on match suitability information according to one embodiment.
FIG. 4 is a drawing illustrating, by way of example, a method of obtaining match suitability information using a matching model according to one embodiment.
FIG. 5 is a drawing illustrating, by way of example, the update of a match-pending group according to one embodiment.
FIG. 6 is a drawing illustrating information recommending a premium service while, by way of example, describing a matching request screen according to one embodiment.
FIG. 7 is a drawing illustrating, by way of example, a premium service according to one embodiment.
FIG. 8 is a drawing illustrating, by way of example, a screen display provided to a user who is using a premium service according to one embodiment.
FIG. 9 is an operational flowchart of a method of providing a matching service on an electronic device according to one embodiment.
FIG. 10 is an exemplary drawing of a configuration of an electronic device according to one embodiment.

### [Best Mode of Implementing the Invention]

The terms used in the embodiments have been selected from conventionally used terms as much as possible considering the functions of the present invention, but this may vary depending on the intent or precedents of technicians working in the field, the emergence of new technologies, and the like. Additionally, in some particular cases, terms have been arbitrarily selected by the applicant; in such cases, the meaning thereof will be described in detail in the relevant portion of the description. Therefore, the terms used in the present invention must be defined based on the meaning of the terms and the overall content of this disclosure, rather than simply based on the names of the terms.

If a portion of a specification is said to "comprise" a component, this does not mean that it excludes other components, but rather that it may further comprise other components, unless otherwise stated. Additionally, terms such as "... part," "... module," and the like, as set forth in the specification, refer to a unit that processes at least one function or operation, which may be implemented by hardware or software, or a combination of hardware and software.

The expression "at least one of a, b, and c" as used throughout the specification may encompass "only a," "only b," "only c," "a and b," "a and c," "b and c," or "all of a, b, and c."

The "terminal" mentioned below may be implemented as a computer or portable terminal capable of accessing a server or another terminal via a network. "Computer" in this case may encompass, for example, a notebook, desktop, or laptop on which a web browser is loaded, and "portable terminal" may encompass for example, a wireless communication device that ensures portability and mobility, such as a communication-based terminal such as IMT (International Mobile Telecommunication), CDMA (Code Division Multiple Access), W-CDMA (W-Code Division Multiple Access), LTE (Long Term Evolution), and any sort of handheld-based wireless communication device such as a smartphone, tablet PC, or the like.

Hereinbelow, one embodiment of the present invention will be described in detail, with reference to the attached drawings, so that a person of ordinary skill in the art of the field to which the present invention belongs can readily implement it. However, the present invention is not limited to the embodiment described here, and may be implemented in several different forms.

Hereinbelow, one embodiment of the present invention is described in detail with reference to the accompanying drawings.

In describing the embodiments, the description of technical content will be omitted that is widely known in the technical field to which the present invention belongs and does not have a direct relation to the present invention. This is done in order to omit unnecessary explanation in order to convey the gist of the present invention more clearly.

For the same reason, some components in the attached drawings are exaggerated, omitted, or shown schematically. Additionally, the size of each component does not wholly reflect its actual size. In each drawing, the same reference numbers are assigned to identical or corresponding components.

The advantages and characteristics of the present invention, and the method by which these are achieved, will become clear upon referring to the embodiments described in detail below, in combination with the attached drawings. However, the present invention is not limited to the embodiments set forth below, but can be implemented in various different forms; these embodiments are provided only to complete the disclosure of the present invention, and to fully inform a person of ordinary skill in the art to which the invention pertains regarding the scope of the invention; the present invention is defined only by the scope of the claims. Throughout the specification, the same reference symbols denote the same components.

In this case it will be understood that each block of the processing flowcharts, and combinations of the flowcharts, can be carried out by means of computer program instructions. These computer program instructions may be loaded in a processor of a general-purpose computer, a special-purpose computer, or other programmable data processing device, such that when the processor of the computer or other programmable data processing device executes the instructions, a means is generated for carrying out the functions described in the flowchart block(s). These computer program instructions can also be stored in a computer-usable or computer-readable memory that can direct a computer or other programmable data processing device to implement a function in a particular way; consequently, the instructions stored in the computer-usable or computer-readable memory can also produce an article of manufacture that contains an instruction means for carrying out the function described in the flowchart block(s). Because the computer program instructions can also be loaded in a computer or other programmable data processing device, a series of operational steps can be carried out on the computer or other programmable data processing device to generate a computer-executable process, so that the instructions carried out on the computer or other programmable data processing device can also provide steps for executing the functions described in the flowchart block(s).

In addition, each block may represent a module, segment, or portion of code that comprises one or more executable instructions for executing a particular logical function(s). It should also be noted that in some alternative embodiments, it is possible for the functions mentioned in the blocks to occur out of order. For example, two blocks shown in succession may in fact be executed at substantially the same time, or depending on the respective functions of the blocks, they may sometimes be executed in reverse order.

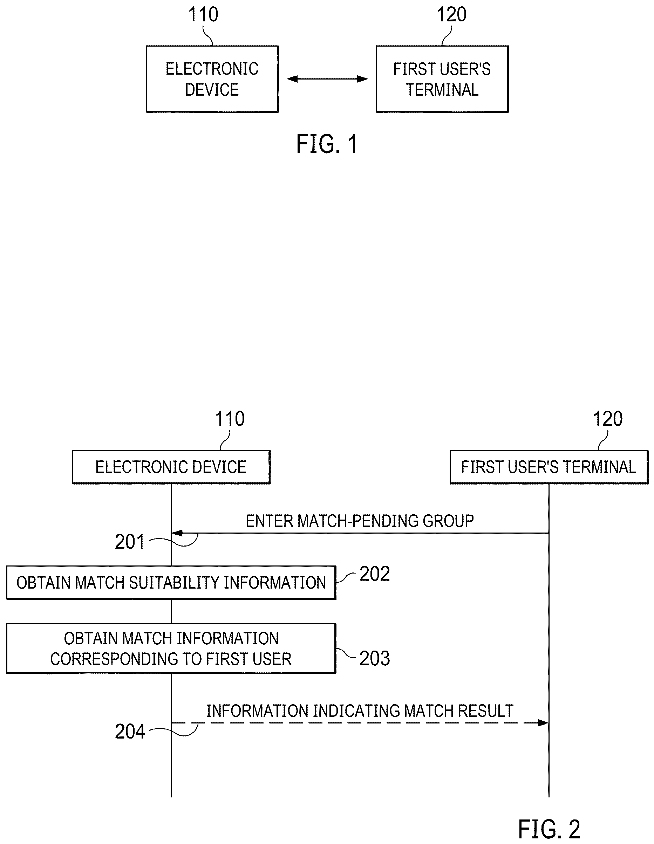

FIG. 1 is a schematic drawing showing a system that provides a matching service according to one embodiment.

According to various embodiments, the system providing a matching service comprises an electronic device (110) and a first user's terminal (120). The system providing a matching service according to one embodiment may further comprise a network that supports information transmission/reception among at least some of the electronic device (110), the first user's terminal (120), and an external device.

The electronic device (110) of the system providing the matching service, and the terminal (120) of the first user, may each comprise a transceiver, memory, and a processor. In addition, the electronic device (110) and the first user's terminal (120) each refer to a respective unit that processes at least one function or operation; this may be implemented as hardware or software, or as a combination of hardware and software. Throughout the embodiments, the electronic device (110) and the first user's terminal (120) are mentioned as separate devices and servers, but this may be a logically divided structure in which they are implemented as separate functions in a single device or server.

According to one embodiment, the electronic device (110) and the first user's terminal (120) may comprise a plurality of computer systems or computer software implemented as network servers. For example, at least a portion of the electronic device (110) and the first user's terminal (120) may be connected to a lower-level device that can communicate with another network server through a computer network such as an intranet or internet, and may refer to a computer system and computer software that receives a request to carry out a task, carries out the task, and provides the outcome of carrying out the task. In addition, at least a portion of the electronic device (110) and the first user's terminal (120) can be understood as a broad concept comprising a series of application programs that can operate on a network server, and various kinds of databases built inside the server. For example, at least a portion of the electronic device (110) and the first user's terminal (120) may be implemented using a network server program that is provided in various ways according to operating system such as DOS, Windows, Linux, UNIX, or MacOS.

For convenience of explanation, the electronic device (110) and the first user's terminal (120) are referred to as such; however, they should be understood as generic electronic devices that: correspond to various types of devices such as computer devices and mobile communication terminals; can comprise various types of devices; or can be comprised within various types of devices.

The electronic device (110) is a device that processes and provides information. The electronic device (110) may carry out various operations for processing and/or providing information. Specifically, the electronic device (110) identifies a first user entering a match-pending group; obtains match suitability information is obtained related to the progress of matching among a plurality of users in the match-pending group; and obtains match information corresponding to the first user based on the match suitability information. According to one embodiment, if the first user is not matched with another user, then the electronic device (110) may: obtain, after the match-pending group is updated, information about match suitability related to the progress of matching among a plurality of users belonging to the updated match-pending group; and reobtain match information that corresponds to the first user, based on match suitability information related to the progress of matching among a plurality of users belonging to the updated match-pending group.

The first user may be a user who wishes to use the matching service, and more specifically, may be a user who is entering (or who has entered) the match-pending group. The first user's terminal (120) may provide to the first user information related to the matching service. For example, the first user's terminal (120) may provide a user interface to the first user for entering the match-pending group, and may provide the first user with information recommending the use of a premium service. Additionally, the first user's terminal (120) may provide various types of information related to the matching service to the first user. The method by which the first user's terminal (120) provides information includes, but is not limited to, "display via a screen"; various methods of providing information via various types of output devices, such as providing information via a speaker, may be encompassed within the scope of the present invention.

The information the first user's terminal (120) provides may comprise information processed and provided by the electronic device (110), but is not limited thereto.

The electronic device (110) and the first user's terminal (120) are described below in greater detail with reference to FIGS. 2 to 9 and so forth.

The operations related to a method of providing a series of information according to various embodiments may be implemented by a single physical device, or they may be implemented by organically combining a plurality of physical devices. For example, some of the components comprised within a system that provides a matching service may be implemented by any one physical device, while others may be implemented by another physical device. For example, any one physical device may be implemented as part of the electronic device (110), and another physical device may be implemented as part of the first user's terminal (120), or as part of another external device.

In some cases, each component comprised within the system that provides the matching service may be implemented as being respectively distributed and placed on different physical devices, and these distributed components may be organically combined to carry out the functions and operations of the system that provides the matching service. For example, in the present specification, the electronic device (110) comprises at least one sub-device, and one part of the operations that are described as being carried out by the electronic device (110) may be carried out by the first sub-unit, and another part of the operations may be carried out by the second sub-unit.

FIG. 2 is an operation flowchart illustrating the operation of each device in a system providing a matching service according to one embodiment.

Referring to FIG. 2, the electronic device (110) according to one embodiment identifies a first user entering a match-pending group (201). According to one embodiment, the electronic device (110) can identify the first user's entry into the match-pending group based on information received from the first user's terminal (120). However, the scope of the present invention is not limited thereto.

According to one embodiment, the operation of identifying the first user may comprise one or more of: "operation of obtaining the first user's match request" and "operation of confirming the termination of the first user's previous match." In other words, it can be understood as "identifying the first user entering the match-pending group," both when the first user explicitly provides input requesting a match, and also when a previous match ends and the user returns to a match-pending state.

A "match-pending group" can be understood as a group comprising a plurality of users in a match-pending state. According to one embodiment, a "match-pending group" may comprise various types of users, without distinction. For example, it can be understood that a user using the matching service may be included in the "match-pending group," irrespective of whether the user is using a filtering service and whether the user is using a premium service.

The electronic device (110) obtains information about match suitability related to the progress of matching among a plurality of users in the match-pending group (202). The match suitability according to one embodiment may comprise information reflecting an expected value of conversation duration during the matching process. For example, the electronic device (110) may predict how long a conversation will last if a pair of users are matched, and may assign a higher match suitability value to a pair with a greater predicted duration.

However, the match suitability does not necessarily need to be set so as to be directly proportional to conversation duration. For example, the electronic device (110) according to one embodiment may also award a point bonus to a user who is using a premium service. For example, in the case that if a first user using a premium service is matched with a third user, the expected value of the conversation duration is 3 minutes, and if a second user not using a premium service is matched with the third user, the expected conversation duration is 4 minutes, the expected value of the conversation duration is greater when the second user is matched with the third user, but because the first user is using the premium service, the match suitability of pairing the first user and the third user may be higher than that of pairing the second user and the third user.

By way of a more specific example of granting a point bonus to a user who is using a premium service, in the example above, the match suitability score for the pairing of the first user and the third user could be determined as 45 points, calculated by adding a 15 point bonus for using the premium service to the 30 points based on the expected conversation duration, and the match suitability score between the second user and the third user could be determined as 40 points based on the expected value of the conversation duration.

Regarding the operation of reference numeral 202, obtaining match suitability information, according to one embodiment the electronic device (110) is able to identify pairs with a likelihood of matching that can be formed among a plurality of users in the match-pending group. For each of the pairs with a likelihood of matching, the electronic device (110) can identify the respective match suitability associated with the progress of matching for that pair.

Regarding the operation of "identifying pairs with a likelihood of matching," the electronic device (110) according to one embodiment may determine whether a first user is using the filtering service, and if the first user is using the filtering service, then it may include a pair with a counterpart satisfying the filter conditions set by the first user among the pairs with a likelihood of matching. The electronic device (110) may exclude a pair with a counterpart that does not satisfy the filter conditions from the pairs with a likelihood of matching.

The filter condition according to one embodiment may comprise one or more of: a condition for matching with a counterpart of a specific gender, and a condition for matching with a counterpart in a particular region. For example, the filter condition may comprise "requiring the counterpart to be female" and "requiring the counterpart to reside in the Republic of Korea." If such a filter condition is set, and if the second user is male or resides in a country other than the Republic of Korea, then the pairing of the first user and the second user may be determined to have no likelihood of matching.

According to one embodiment, whether a filtering service is used may be according to the user's default settings. For example, if the first user has specified using a filtering service as a default setting, then matching can proceed by treating the first user as a filtering service user without asking again whether the user is using the filtering service; in this case, the specific filter condition may also follow the default setting.

Alternatively, depending on the embodiment, even if the first user does not set the filtering service as the default, if it previously used the filtering service, it may be automatically set to use the filtering service again; likewise, even if the first user does not set the filter conditions by default, if it previously used the filtering service, it may be automatically set to use the filter condition that was set previously.

According to one embodiment, the filtering service may require the use of payment as a condition for its use. Moreover, if the filtering service requires the use of payment as a necessary condition, and if the first user's payment is insufficient for using the filtering service, then the first user's terminal (120) may provide a screen for recharging payment funds to the first user.

Hereinabove have been described one embodiment in which the filtering service is set as a default, one embodiment in which the filtering service is automatically set to be reused if it was previously used, one embodiment in which the filtering service requires payment, and the like. The description hereinabove can be understood as also being applicable to a "premium service" as will be described below. In other words, even in the case of a premium service, whether it is used may also be in accordance with the first user's default setting, and also if the user previously used the premium service, then the premium service may automatically be set to be used again; and if payment is a necessary condition for the premium service, then the first user's terminal (120) may provide the first user with a screen display for proceeding with recharging the means of payment if the first user's means of payment are insufficient for using the premium service.

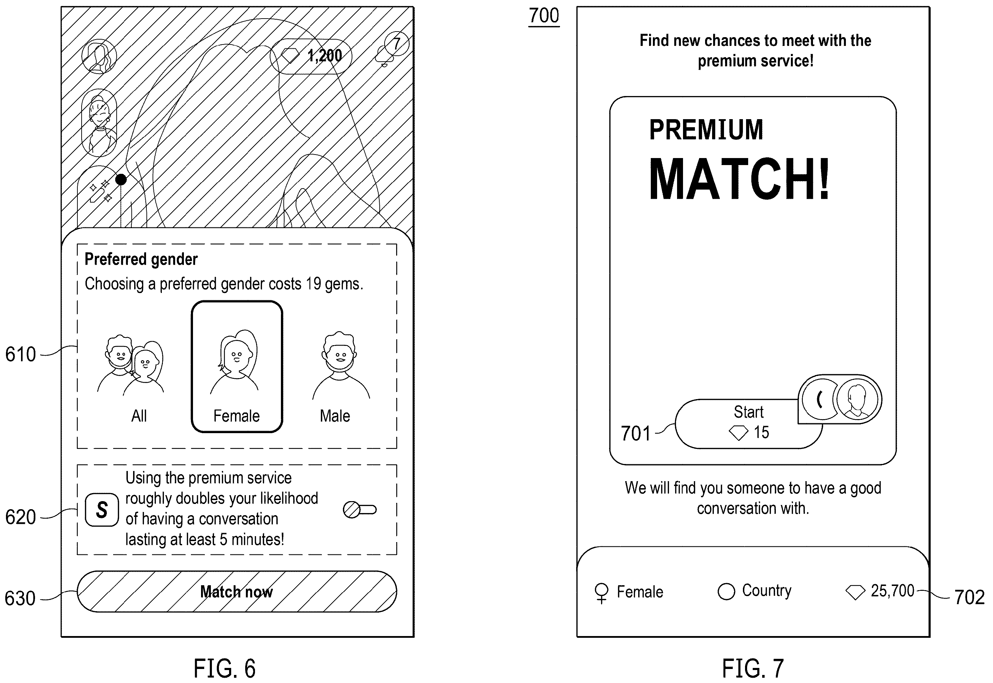

Specific examples related to the use of a filtering service and a premium service are described with reference to FIG. 6 through FIG. 8.

According to one embodiment, the electronic device (110) is able to obtain information about match suitability based on user information. The user information may comprise one or more of: the user's interests, the user's age, the user's region, the user's gender, the user's matching history, the user's service usage time, the user's service subscription period, and whether the user is using a premium service (the service usage time can be understood to represent the actual time spent using the service, and service subscription period can be understood to represent the time elapsed since subscribing). When obtaining match suitability information, the user information of both users that belong to the pair may be considered; however, it both users need not necessarily be considered in relation to every element that the user information comprises. For example, to obtain match suitability information, the electronic device (110) may consider the interests, ages, and locations of both users, but may consider only information related to the matching history and service usage time associated with one user.

According to one embodiment, the electronic device (110) is able to obtain information on match suitability by entering the user information into a pre-trained matching model and obtaining the output of the matching model. The pre-trained matching model may comprise a model based on machine learning technology, but is not limited thereto.

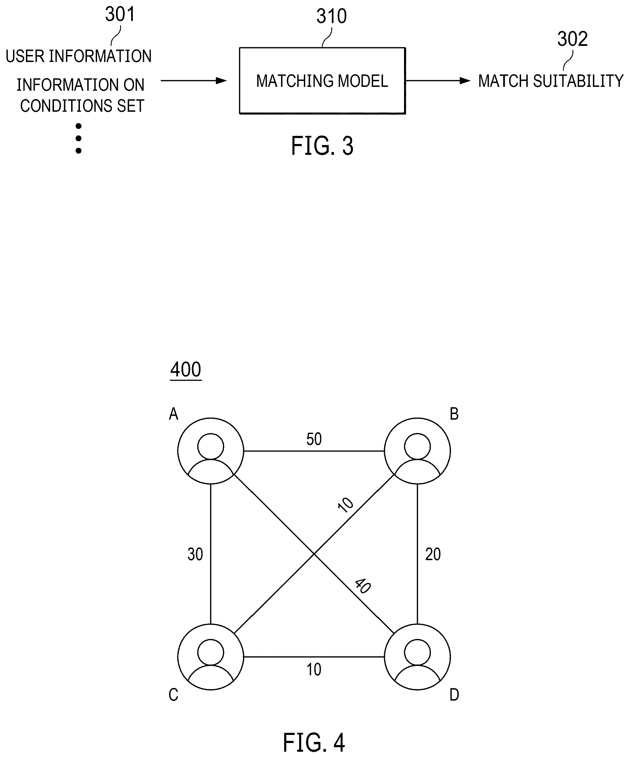

Referring to the example depicted in FIG. 3, the electronic device (110) may input the input information of reference numeral 301 into the matching model (310), and the matching model (310) may then output the match suitability (302) corresponding to that user pair. The matching model (310), however, need not necessarily output the match suitability (302). Various embodiments may exist; for example, depending on the embodiment, if the matching model (310) outputs information that provides a basis for obtaining the match suitability (302), then the electronic device (110) may obtain the match suitability (302) based on that output information, and so forth.

For example, the information output by the matching model (310) according to one embodiment may comprise the expected conversation time between that user pair. By way of a specific example, the information output by the matching model (310) may comprise information such as "expected conversation time: 5 minutes."

By way of another example, the information that the matching model (310) outputs according to one embodiment may comprise a probability that a conversation between that user pair might continue for at least a predetermined time. By way of a specific example, the information that the matching model (310) outputs may comprise information such as "likelihood of conversation lasting at least 3 minutes: 75%."

The input information for reference numeral 301 may comprise user information, but the scope of the present invention is not limited thereto. For example, as shown in FIG. 3, the input information for reference numeral 301 may comprise "information about a condition that has been set." In this connection, the "condition that has been set" may comprise a condition for adjusting the threshold condition if the time elapsed since the user entered the match-pending group is at least a certain level; more detailed information regarding the condition that has been set or threshold condition, and the like, will be described below.

Thus, an embodiment in which match suitability (302) is determined by considering such a "condition that has been set" is not limited to cases in which a matching model (310) is used. In other words, the electronic device (110) may obtain information about match suitability based on information about a condition that has been set, and using such information about a condition that has been set does not require "use of a matching model (310)".

Various factors, in addition to user information and information about condition that has been sets, may be considered for the purpose of determining match suitability; particular examples regarding whether a factor is considered do not limit the scope of the present invention.

According to one embodiment, if the electronic device (110) matches the first user with another user based on match information obtained according to the below-described operation of reference numeral 203, the electronic device (110) may further train the matching model (310) based on the result of matching the first user with the other user. Thus, the pre-trained matching model (310) can not only be used to provide matching services, but also, the results of providing the matching service can also be used to train the matching model (310).

Turning back to FIG. 2, based on the match suitability information, the electronic device (110) obtains match information corresponding to the first user (203). "Matching information" may further comprise various types of information, such as information indicating a successful match, information indicating a failed match, and information indicating that a match is still being attempted.

According to one embodiment, the electronic device (110) can identify pairs among those pairs with a likelihood of matching (see the above-described embodiment regarding the operation of reference numeral 202), the match suitability of which in relation to their matching progress is not eliminated by the threshold condition. In this connection, it is not necessarily required that a threshold condition exists for all pairs, in order to decide whether the match suitability thereof is eliminated. For a pair for which there is no threshold condition, it can be understood that such a pair is naturally identified as a "non-eliminated pair."

According to one embodiment, in order to identify those pairs the match suitability of which is not eliminated by the threshold condition, the electronic device (110) may determine whether the first user has requested that a threshold condition be set. If the first user has requested that a threshold condition be set, then the electronic device (110) can determine whether the match suitability in relation to the progress of matching thereof is satisfied for the first user for those pairs to which the first user belongs, among the pairs with a likelihood of matching.

As to the operation of "determining whether the first user has requested that a threshold condition be set," it is not the case that it is only deemed that "the first user has requested that a threshold condition be set" only if the first user has explicitly requested that a threshold condition be set. For example, the electronic device (110) may determine whether the first user is using a premium service, and if so, then it may determine that the first user has requested that a threshold condition be set. This is because the action of "using a premium service" can itself be interpreted as an action that indicates an intent to set a threshold condition in relation to match suitability.

Depending on the embodiment, even a user who is not using a premium service may be determined to have requested that a threshold condition be set. This is the case of course when the user has explicitly requested that a threshold condition be set, and in some embodiments, a user may be determined to have requested that a threshold condition be set merely by belonging to a match-pending group.

If a first user is using a premium service, and a second user who requested that a threshold condition be set is not using the premium service, then the minimum match suitability required to satisfy the first user's threshold condition may be higher than the minimum match suitability required to satisfy the second user's threshold condition. In other words, although it is possible to set a threshold condition for the second user who is not using the premium service, even in such a case, the threshold condition of the first user, who is using the premium service, may be stricter than that of the second user.

Setting a threshold condition may have the object of preventing the user from being matched with a counterpart whose expected conversation time is shorter than a certain threshold, by establishing a match suitability hurdle. Accordingly, by setting a stricter threshold condition for a user of the premium service, such a user's likelihood of having a positive experience of matching with a user who has a longer expected conversation time can be increased, and as a result, the service satisfaction of a user using a premium service can be enhanced and such a user can be encouraged to continue using the premium service in the future.

If the first user requests that a threshold condition be set, then the electronic device (110) may determine whether the time elapsed since the first user entered the match-pending group satisfies the condition that has been set, and if the elapsed time satisfies the condition that has been set, then the electronic device may adjust the threshold condition for the first user. In this connection, the act of "adjusting" the threshold condition can be interpreted broadly, as encompassing not only the action of changing a threshold condition previously set, but also the act of freshly re-setting the threshold condition.

Users want to be matched with a counterpart they can have a long conversation with; on the other hand, however, an excessively long match-pending time can also operate as a cause of dissatisfaction. Accordingly, if a threshold condition is set in relation to match suitability, and if a match is not achieved within an elapsed time between entering the match-pending group and meeting a condition that has been set, then adjusting the threshold condition may facilitate easier matching with another user.

Such a threshold condition may be adjusted not just once, but over multiple cycles. According to a related example, the electronic device (110) may set the threshold condition as 30 points when the user enters the match-pending group, adjust it to 28 points 10 seconds after entry, adjust it to 26 points 20 seconds after entry, and adjust it to 24 points 30 seconds after entry.

According to one embodiment, the minimum elapsed time required to satisfy the above-described "condition that has been set" may be greater than the update cycle of the match-pending group. In other words, the elapsed time required in order to adjust the threshold condition for the first user may be longer than the period in which the match-pending group is updated. For example, if the update cycle of the match-pending group is 0.7 seconds, then the time that must elapse to adjust the threshold condition for the first user may be set to be more than 0.7 seconds (for example 2 seconds). This may be for the purpose of attempting matching with the first user at least one more time with the updated pool of the match-pending group before adjusting the threshold condition for the first user, even if no other user suitable for matching with the first user can currently be found in the match-pending group.

Regarding the operation of reference numeral 203, if the first user is not being matched with another user, then after the update of the match-pending group, the electronic device (110) can obtain information about match suitability related to the progress of matching among the plurality of users belonging to the updated match-pending group. In addition, the electronic device (110) can obtain match information corresponding to the first user based on the information about match suitability in relation to the progress of matching among the plurality of users in the updated match-pending group. Likewise, if the first user's match fails, then the electronic device (110) can re-attempt matching the first user after the match-pending group is updated. In this way, the intent of the above statement that "the elapsed time for adjusting the threshold condition may be longer than the update cycle of the match-pending group" can be understood to mean that after the match-pending group is updated, matching is re-attempted for a user whose match failed.

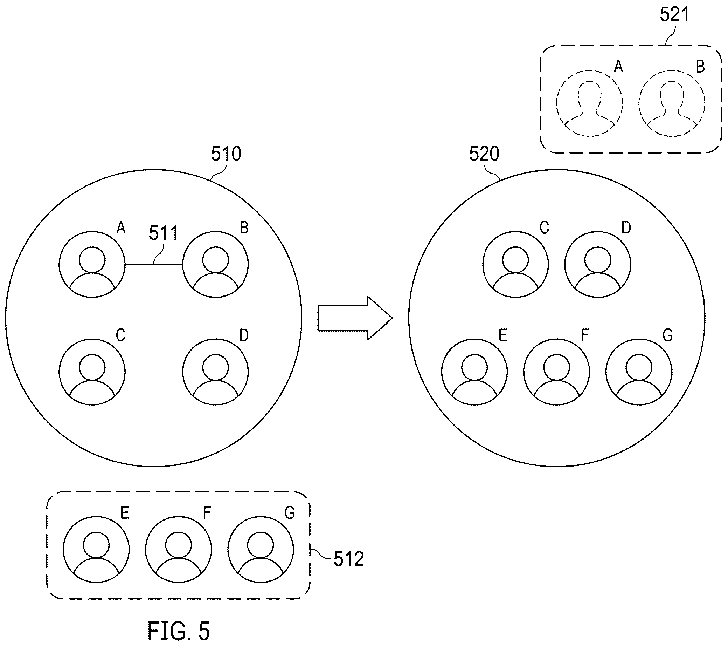

An update to the match-pending group may comprise not only excluding existing user pairings (or users) but also the entry of new user pairs (or users); a detailed example in this regard is described below with reference to FIG. 5.

Turning again to the "identification of pairs the match suitability of which is not eliminated by the threshold condition," the electronic device (110) may carry out a second step wherein a pair is identified that has the highest match suitability among those pairs that are not eliminated by the threshold condition; a third step wherein the users belonging to the pair having the highest match suitability are matched and are excluded them from the match-pending group; and a fourth step wherein those pairs not eliminated by the threshold condition are updated so that pairs that contained one or more of the users excluded from the match-pending group are excluded. In addition, for the updated pairs, the electronic device (110) may further carry out a fifth step wherein the second step, the third step, and the fourth step are repeatedly carried out on the updated pairs The fifth step may be carried out a plurality of times; the scope of the present invention is not limited to a particular number of repetitions.

The process of carrying out the second through fifth steps can be understood as an embodiment of a process of obtaining match information.

To explain the second through fifth steps more clearly, they can be understood as steps in which the process of selecting the pair with the highest match suitability in a group as the matching subject, and then excluding those users from the match-pending group, is carried out repeatedly in sequence. (Excluding cases of elimination by a threshold condition, failure to meet a filter condition, or the like.)

A point to note in this regard is that the action of "updating pairs that are not eliminated by the threshold condition" may not necessarily correspond to the above-described "updating the match-pending group." For example, even if the electronic device (110) internally updates pairs that have not been eliminated by the threshold condition, or internally decides to exclude a particular user from a matching group, it may not immediately reflect such information in the match-pending group. More specifically, updates to the match-pending group occur at a predetermined time interval, and at each update point, the decisions made during the time elapsed since the previous update (for example excluding some users from the matching group) are reflected along with new user entries due to match requests or termination of prior matches. According to an illustrative example to assist in understanding, if the above-described second, third, and fourth steps are repeated at 0.1-second intervals, and the match-pending group is updated every 0.7 seconds, then updating the match-pending group allows the cumulative changes resulting from seven repetitions of the "second step, third step, and fourth step" carried out by the electronic device (110) to be reflected at one time.

A more detailed example related to the second through fifth steps is described below based on FIG. 4. In FIG. 4, for convenience of explanation, it is assumed that there are no pairings with users who have been eliminated by a threshold condition or do not satisfy a filter condition. Under this assumption, referring again to FIG. 4 (400), user A, user B, user C, and user D may belong to the match-pending group. Among the pairs that user A, user B, user C, and user D can form, the match suitability of the user A - user B pair is 50, which is the highest (second step), and therefore the user A - user B pair can be matched and excluded from the match-pending group (third step). The user A - user C pair, the user A - user D pair, the user B - user C pair, and the user B - user D pair are then all "pairs to which one or more users excluded from the match-pending group belonged" and are thus excluded; if the pairs not eliminated by the threshold condition are updated, only the user C - user D pair remains (fourth step). Finally, repeating the second through fourth steps on the updated pairs results in matching user C and user D, and the match-pending group can be emptied. Thus, in conclusion, by carrying out the second through fifth steps, user A and user B can be matched, and user C and user D can be matched.

FIG. 5 depicts an illustrative example in which the match-pending group is updated. Referring again to FIG. 5 (500), before updating, the match-pending group (510) may comprise user A, user B, user C, and user D. Out of the user pairings among users A through D, the user A - user B pair (511) may have the highest match suitability. In contrast, the user C - user D pair may fail to satisfy the threshold condition.

User E, user F, and user G may represent users attempting to enter the match-pending group, for example users whose previous match has ended or who are requesting a match.

When the update time for the match-pending group arrives, an update may take place. When the update time arrives, user A and user B may be excluded from the match-pending group (521). Meanwhile, users E, F, and G may enter the match-pending group. Consequently, the match-pending group (520) after the update may comprise user C, user D, user E, user F, and user G.

Returning to FIG. 2 once more, as regards the above-described second step, a potential issue arises when a plurality of pairings have the highest match suitability score. For example, if user A - user B pairing has the highest match suitability score of 50 points, but the user B - user D pairing also has the highest match suitability score of 50, a question may arise as to which pair should have priority in matching. According to one embodiment related to this, (i) if these pairs only include different users, then matching all such pairs is straightforward and poses no problem, and (ii) if the pairs do not only include different users (i.e., they include at least one identical user), then the pair with priority for matching can be determined based on a criterion that has been set. Regarding this criterion that has been set, various embodiments may exist, such as prioritizing a matching opportunity for a user who has been waiting for a longer time since entering the match-pending group, and prioritizing a user who is using a premium service; the scope of the present invention is not limited to any particular embodiment.

The electronic device (110) may provide information indicating the outcome of the matching to the first user's terminal (120) (204). However, in some cases the electronic device (110) may not separately provide information indicating the matching result to the first user's terminal (120). For example, if the first user's match has failed but matching attempts are still ongoing, then instead of providing information about the matching attempt, the match-in-progress screen display may be kept.

FIG. 6 is a drawing illustrating information recommending a premium service while, by way of example, describing a matching request screen according to one embodiment.

Referring to FIG. 6, a screen display as shown may be displayed on the terminal (120) of the first user according to one embodiment. The first user may request matching based on the information displayed on the screen. More specifically, the first user according to one example may request matching by providing an input corresponding to the match-now button (630), and the first user's terminal (120) may correspondingly transmit the first user's match request information to the electronic device (110).

Reference numeral 610 may provide an illustrative example of a feature for providing a filtering service. Referring to reference numeral 610, a feature is provided for selecting a preferred gender, and information about the usage requirements of the filtering service, such as "choosing a preferred gender costs 19 gems," may be provided along with it. If the first user provides input corresponding to the "All" button, then this can be understood as not using the filtering service because no gender is specified; and in contrast, if the user provides input corresponding to the "Female" or "Male" buttons, then this can be understood as using the filtering service.

Reference numeral 620 may provide an illustrative example of a feature for providing a premium service. Referring to reference numeral 620, a feature may be provided for selecting whether to use the premium service, and information recommending use of the premium service may be provided along with it, such as "Using the premium service roughly doubles your likelihood of having a conversation lasting at least 5 minutes!"

Depending on the embodiment, the information recommending the use of premium services may not necessarily be provided to every user, and it may not be provided in all situations. In addition, in some embodiments, if information recommending the use of a premium service is provided, then the specific content of the information provided may vary depending on the user.

According to one embodiment, the electronic device (110) may obtain information related to the history of providing the matching service and, based on the history information, may generate information recommending the use of a premium service. The electronic device (110) may provide to the first user information generated in this way that recommends the use of a premium service.

According to a more specific embodiment, the electronic device (110) may confirm the first user's history of using the matching service, and then decide whether to provide the first user with information recommending the use of a premium service based on the first user's history of using the matching service. For example, if the average conversation time in the first user's match history is less than 3 minutes, then the electronic device (110) may provide to the first user information recommending the use of a premium service.

According to one embodiment, the information recommending the use of the premium service may comprise one or more of: information comparing the expected value of conversation duration when using the premium service with the expected value of conversation duration when not using the premium service; and information comparing the likelihood of conversing for a time exceeding a set criterion when using the premium service with the likelihood of conversing for a time exceeding the set criterion when not using the premium service.

Illustrative examples of "information comparing the expected value of the conversation duration when using the premium service with the expected value of the conversation duration when not using the premium service" may include: "using the premium service increases conversation duration by 2 minutes" and "conversations last an average of 5 minutes when using the premium service, and an average of 3 minutes when not using the premium service," and the like. Illustrative examples of "information comparing the likelihood of conversation exceeding a specified duration when using the premium service and the likelihood of conversations exceeding the specified duration when not using the premium service" may include "using the premium service roughly doubles your likelihood of having a conversation lasting at least 5 minutes" (example shown at reference numeral 620).

According to one embodiment, if the number of users of the matching service satisfies an established condition, then the electronic device (110) may provide information recommending the use of the premium service to the first user. For example, if the number of users currently using the matching service is at least 100, then the electronic device (110) may provide information recommending the use of the premium service to the first user. Depending on the embodiment, instead of determining whether a condition that has been set related to the number of users of the matching service is satisfied in real time, the electronic device (110) may determine a specific time period (for example a peak time period when users are generally concentrated) based on history information, and may provide the first user with information recommending use of the premium service during that time period.

Depending on the embodiment, if the number of users of the matching service satisfies a condition that has been set or is within a specific time period, then the electronic device (110) may also make possible the use of a premium service (i.e., beyond varying whether to provide recommendation information, it may actually enable the use of a premium service only "if the number of users of the matching service satisfies a condition that has been set or is within a particular time period"). However, this is merely a single example; the scope of the present invention is not limited to such an embodiment.

Hereinabove, embodiments have been described in which information recommending the use of a premium service is not necessarily provided to all users, or is not provided in all situations; or in which the specific informational content provided varies depending on the user. However, the above-described embodiments are merely illustrative examples to assist in understanding, and the scope of the present invention should not be construed to be limited by these embodiments.

FIG. 7 is a drawing illustrating, by way of example, a premium service according to one embodiment.

Referring to FIG. 7, a screen display as shown may be displayed on the terminal (120) of the first user according to one embodiment (700). The first user may use a premium service based on the information displayed on the screen. More specifically, the first user according to one example may request to use the premium service by providing an input corresponding to the Start (701) button, and the first user's terminal (120) may correspondingly transmit the first user's request to use the premium service to the electronic device (110).

According to one embodiment, the screen of the first user's terminal (120) may be provided with information recommending the use of the premium service, such as "find new chances to meet with the premium service!" and "we will find you someone to have a good conversation with."

According to one embodiment, the screen of the first user's terminal (120) may provide information about the requirements for using the premium match service (e.g., "15 gems" in reference numeral 701). Additionally, depending on the embodiment, the screen of the first user's terminal (120) may also provide information about the quantity of payment that the first user holds ("25,700 gems" in reference numeral 702).

In relation to information about requirements, such as the "15 gems" in reference numeral 701, the electronic device (110) according to one embodiment may also display the total amount of payment that the user will make. For example, if a user is using both the filtering service and the premium service, the total payment required to use the filtering service and the total payment required to use the premium service can be displayed on the first user's terminal (120). By way of a specific example, if the payment required in order to use the filtering service is 15 gems and the payment required to use the premium service is also 15 gems, then the first user's terminal (120) may display "30 gems" as the requirement.

In some embodiments, the premium service may require the use of the filtering service as a basic condition (i.e., it may be set so that the premium service cannot be used without the filtering service); in such a case, in order to avoid confusing the first user, it may be more preferable to adopt a method in which the total amount of payment the first user will make is displayed.

The depictions in FIG. 7 and in reference numeral 620 of FIG. 6 are merely different illustrative examples related to the use of a premium service and do not limit the scope of the present invention; accordingly, the fact that the contents of the two depictions differ somewhat should not be interpreted as these disclosures being mutually contradictory.

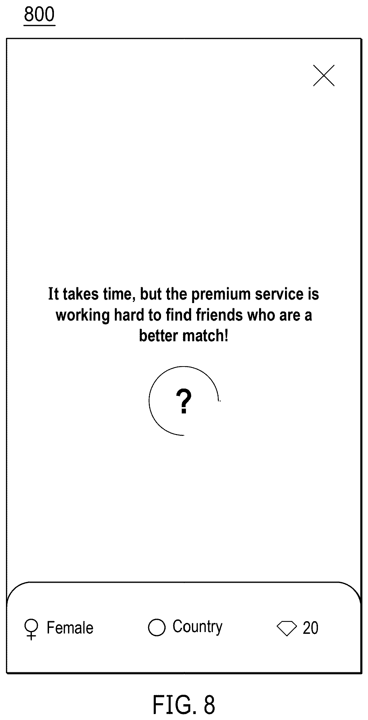

FIG. 8 is a drawing illustrating, by way of example, a screen display provided to a user who is using a premium service according to one embodiment.

Referring to FIG. 8, according to one embodiment, if the first user is using a premium service, then the depicted screen display may be displayed on the first user's terminal (120) (800). According to one embodiment, information indicating that the first user is using a premium service may be provided on the first user's terminal (120). According to one embodiment, information providing guidance about features of the premium service may be provided on the first user's terminal (120). Reviewing the depicted screen display, if the first user is using a premium service, then information such as "It takes time, but the premium service is working hard to find friends who are a better match!" may be provided on the first user's terminal (120). Such information informs the first user that it is using the premium service, and also explains the premium service's features (because a threshold condition for match suitability is being applied, matching may take longer, but it can lead to matching with someone who is expected to have a longer conversation time with the user).

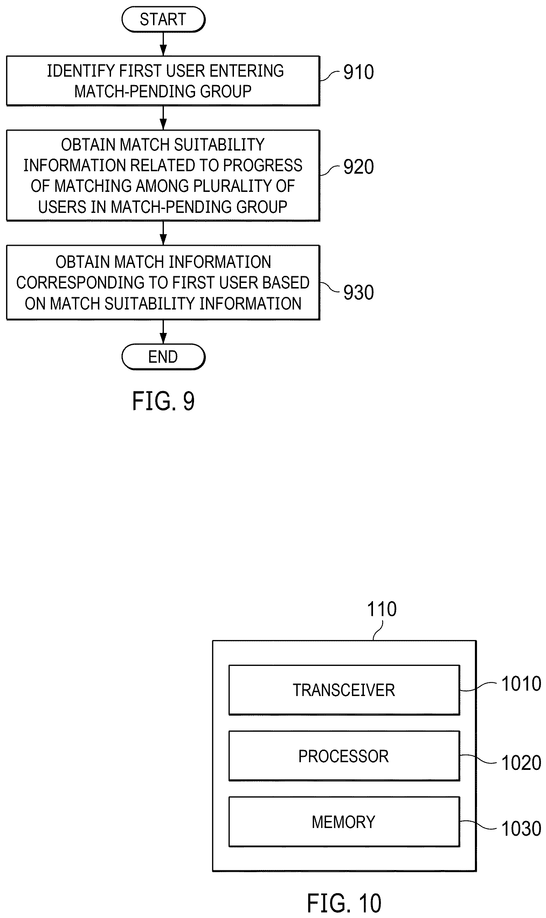

FIG. 9 is an operational flowchart of a method of providing a matching service on an electronic device according to one embodiment.

Referring to FIG. 9, the electronic device (110) according to one embodiment identifies a first user entering a match-pending group (910). According to one embodiment, the electronic device (110) can identify the first user's entry into the match-pending group based on information received from the first user's terminal (120).

The electronic device (110) obtains information about match suitability related to the progress of matching between a plurality of users in the match-pending group (920). The match suitability according to one embodiment may comprise information reflecting an expected value of conversation duration during the matching process.

Based on the match suitability information, the electronic device (110) obtains match information corresponding to the first user (930). According to one embodiment, the electronic device (110) is able to identify those pairs, from among the pairs with a likelihood of matching, the match suitability of which in relation to the matching process is not eliminated by the threshold condition. The electronic device (110) may carry out a second step wherein a pair is identified that has the highest match suitability among those pairs that are not eliminated by the threshold condition; a third step wherein the users belonging to the pair having the highest match suitability are matched and are excluded them from the match-pending group; and a fourth step wherein those pairs not eliminated by the threshold condition are updated so that pairs that contained one or more of the users excluded from the match-pending group are excluded. In addition, for the updated pairs, the electronic device (110) may further carry out a fifth step wherein the second step, the third step, and the fourth step are repeatedly carried out on the updated pairs

FIG. 10 is an exemplary drawing of a configuration of an electronic device according to one embodiment.

Referring to FIG. 10, the electronic device (110) comprises a transceiver (1010), a processor (1020), and a memory (1030). The electronic device (110), via the transceiver (1010), may be connected to and exchange data with the first user's terminal (120), other external devices, and the like.

The processor (1020) may comprise one or more of the devices described above with reference to FIG. 1 through FIG. 9, or it may implement at least one method described above with reference to FIG. 1 through FIG. 9. The memory (1030) may store information for carrying out at least one of the methods described above with reference to FIG. 1 through FIG. 9. The memory (1030) may be a volatile memory or a non-volatile memory.

The processor (1020) may control the electronic device (110) in order to execute a program and provide information. The code of the program executed by the processor (1020) may be stored in the memory (1030).

In addition, the electronic device (110) according to one embodiment may further comprise an interface that may provide information to the user.

The present specification and drawings disclose preferred embodiments of the present invention; although particular terms have been used, they have been used only to easily explain the technical content of the present invention and in a conventional sense so as to assist in understanding the present invention, and are not intended to limit its scope. In addition to the embodiments disclosed herein, it will be apparent to a person of ordinary skill in the art to which the present invention pertains that other modifications based on the technical concept of the present invention are possible.

The server, electronic device, or terminal recommended according to the above-described embodiments may comprise: a processor, a memory for storing and executing program data, a permanent storage such as a disk drive, a communication port that communicates with an external device, a touch panel, a key, a user interface device such as a button, or the like. Methods that are implemented as software modules or algorithms may be stored on a computer-readable recording medium as computer-readable codes or program commands that can be executed by the processor. Computer-readable recording media include magnetic storage media (for example read-only memory (ROM), random-access memory (RAM), floppy disks, hard disks, and the like) and optical reading media (for example CD-ROM, Digital Versatile Disc (DVD)), and the like. The computer-readable recording medium is distributed in computer systems connected via a network so that computer-readable codes may be stored and executed in a distributed manner. The medium is readable by a computer, and may be stored in the memory and executed by the processor.

The present embodiment may be represented by functional block configurations and various processing steps. Such functional blocks may be implemented as any number of various hardware and/or software configurations that execute the particular functions. For example, the embodiment may use integrated circuit configurations, such as memory, processing, logic, look-up tables, and the like, that may execute various functions under the control of one or more microprocessors or other control devices. Similarly to how the components may be implemented as software programs or software elements, the present embodiment may be implemented in a programming or scripting language such as C, C++, Java, assembler, Python, or the like, comprising various algorithms implemented as a combination of data structures, processes, routines or other programming constructs. Functional aspects may be implemented as algorithms executed on one or more processors. Additionally, the present embodiments may use conventional techniques for electronic environment settings, signal processing, and/or data processing and the like. Such terms as "mechanism," "element," "means," and "configuration" can be used broadly and are not limited to mechanical and physical configurations. The above terms may encompass the meaning of a series of software processes (routines) in association with a processor or the like.

The above-described embodiments are only an illustrative example, and other embodiments may be implemented within the scope of the claims set forth below.

## Claims

1. A method of providing a matching service in an electronic device, comprising:
a step wherein a first user entering a match-pending group is identified;
a step wherein match suitability information is obtained related to the progress of matching among a plurality of users in the match-pending group; and
a step wherein match information corresponding to the first user is obtained based on the match suitability information.

2. The method of providing a matching service according to Claim 1, wherein the step wherein the match suitability information is obtained comprises:
a step wherein pairs are confirmed that can be formed among the plurality of users and have a likelihood of matching; and
a step wherein, for each respective pair with a likelihood of matching, the match suitability for that pair is confirmed in relation to the progress of matching.

3. The method of providing a matching service according to Claim 2, wherein:
the step wherein the potentially matching pairs are identified comprises:
a step wherein it is determined whether the first user is using a filtering service; and
a step wherein if the first user is using a filtering service, then the pairs with counterparts satisfying a filter condition set by the first user are included among the pairs with a likelihood of matching; and wherein
the electronic device does not include, in the pairs with a likelihood of matching, those pairs with counterparts that do not satisfy the filter condition.

4. The method of providing a matching service according to Claim 2, wherein the step wherein the match information is obtained comprises:
a step wherein, among the pairs with a likelihood of matching, pairs are identified the match suitability of which is not eliminated by a threshold condition in relation to the matching progress.

5. The method of providing a matching service according to Claim 4, wherein the step wherein the match information is obtained further comprises:
a second step wherein a pair is identified that has the highest match suitability among those pairs that are not eliminated by the threshold condition;
a third step wherein the users belonging to the pair having the highest match suitability are matched and are excluded them from the match-pending group;
a fourth step wherein those pairs not eliminated by the threshold condition are updated so that pairs that contained one or more of the users excluded from the match-pending group are excluded; and
a fifth step wherein the second step, the third step, and the fourth step are repeatedly carried out on the updated pairs.

6. The method of providing a matching service according to Claim 4, wherein:
the step wherein the pairs not eliminated by the threshold condition for match suitability are identified comprises:
a step wherein it is determined whether the first user has requested setting the threshold condition; and
a step wherein if the first user has requested that a threshold condition be set, then it is determined whether the match suitability in relation to the progress of matching, for the pairs with a likelihood of matching to which the first user belongs, satisfies the threshold condition for the first user.

7. The method of providing a matching service according to Claim 6, wherein the step wherein it is determined whether the first user has requested that a threshold condition be set comprises a step wherein it is determined whether the first user is using a premium service.

8. The method of providing a matching service according to Claim 7, wherein if the first user is using the premium service, and the second user who requested the setting of the threshold condition is not using the premium service, then the minimum match suitability required to satisfy the threshold condition of the first user is higher than the minimum match suitability required to satisfy the threshold condition of the second user.

9. The method of providing a matching service according to Claim 6, wherein if the first user requests that a threshold condition be set, then the step wherein pairs are identified the match suitability of which is not eliminated by the threshold condition further comprises:
a step wherein it is determined whether the elapsed time since the first user entered the match-pending group satisfies a condition that has been set; and
a step wherein if the elapsed time satisfies the condition that has been set, then the threshold condition of the first user is adjusted.

10. The method of providing a matching service according to Claim 9, wherein the minimum elapsed time required to satisfy the condition that has been set is longer than the update cycle of the match-pending group.

11. The method of providing a matching service according to Claim 9, wherein the electronic device obtains match suitability information based on the condition that has been set information.

12. The method of providing a matching service according to Claim 1, wherein the step wherein a first user entering the match-pending group is identified comprises one or more of:
a step wherein a matching request is obtained from the first user; and
a step wherein the termination of the first user's previous match is confirmed.

13. The method of providing a matching service according to Claim 1, wherein:
the electronic device obtains information about match suitability based on user information, comprising one or more of: the user's interests, the user's age, the user's region, the user's gender, the user's matching history, the user's service usage time, the user's service subscription period, and whether the user is using a premium service.

14. The method of providing a matching service according to Claim 13, wherein the step wherein match suitability information is obtained comprises:
a step wherein the user information is entered into a pre-trained matching model; and
a step wherein an output of the matching model is obtained.

15. The method of providing a matching service according to Claim 1, wherein if the first user is not matched with another user, then the method further comprises:
a step wherein, after the match-pending group is updated, information is obtained on match suitability related to the progress of matching among a plurality of users belonging to the updated match-pending group; and
a step wherein match information that corresponds to the first user is reobtained, based on match suitability information related to the progress of matching among a plurality of users belonging to the updated match-pending group.

16. The method of providing a matching service according to Claim 1, wherein the step wherein the match suitability information is obtained comprises:
a step wherein a point bonus is awarded to a user who is using a premium service.

17. The method of providing a matching service according to Claim 1, wherein the match suitability comprises information reflecting an expected value of conversation duration during the matching process.

18. The method of providing a matching service according to Claim 1, further comprising:
a step wherein history information is obtained related to the provision of the matching service;
a step wherein, based on the history information, information is generated that recommends using a premium service; and
a step wherein the information that recommends using the premium service is provided to the first user.

19. A computer-readable non-transitory recording medium whereon a program is recorded for executing the method of Claim 1 on a computer.

20. An electronic device that provides a matching service, wherein the electronic device comprises a transceiver, a memory that stores commands, and a processor, wherein the processor:
is connected to the transceiver and the memory;
identifies a first user entering a match-pending group;
obtains match suitability information related to the progress of matching among a plurality of users in the match-pending group; and
obtains match information corresponding to the first user based on the match suitability information.
